# EUROPÄISCHE PATENTSCHRIFT

(11) **EP 1 881 243 B1**
(45) Veröffentlichungstag und Bekanntmachung des Hinweises auf die Patenterteilung: **22.04.2009**
(21) Anmeldenummer: 06015050.5
(22) Anmeldetag: 19.07.2006
(51) Int. Cl.: F16J 15/32

(54) **Radialwellendichtring mit Druckregulierungseinrichtung**
Radial shaft seal with pressure regulation mechanism
Joint à lèvre radiale avec un dispositif de régulation de pression

(43) Veröffentlichungstag der Anmeldung: 23.01.2008
(73) Patentinhaber: Carl Freudenberg KG, 69469 Weinheim (DE)
(72) Erfinder: Braun, Uwe, 69469 Weinheim (DE); Hintenlang, Günter, 69518 Absteinach (DE); Druckenhengst, Rolf, 68623 Lampertheim (DE)

(56) Entgegenhaltungen:
- DE-A1- 3 333 229
- DE-A1- 3 405 780
- US-A- 5 167 419

## Beschreibung

### Technisches Gebiet

Die Erfindung betrifft einen Radialwellendichtring, umfassend einen Stützkörper, wobei dem Stützkörper mindestens eine erste Dichtlippe und eine Druckregulierungseinrichtung zugeordnet sind, welcher mindestens ein Strömungskanal zugeordnet ist, wobei die Druckregulierungseinrichtung unter Vorspannung stehende Mittel aufweist, durch die der Strömungskanal verschließbar ist

### Stand der Technik

Ein Radialwellendichtring der eingangs beschriebenen Art ist aus der DE 195 43 571 A1 bekannt. Der gattungsbildende Radialwellendichtring weist eine Membran auf, welche mit einem Einstich oder einem Einschnitt versehen ist. Bei Überschreiten einer bestimmten Druckdifferenz der Drücke auf beiden Seiten der Membran erfährt diese eine Wölbung, so dass ein Fluidum von einem Raum in einen anderen strömen kann. Hierdurch wird ein Druckausgleich oder Druckabbau realisiert.

Die Membran des gattungsbildenden Radialwellendichtrings ist aus einem Elastomer gefertigt Elastomere unterliegen einer Alterung und werden nach längerer Betriebsdauer spröde und brüchig. Insoweit ist ein definiertes Öffnungsverhalten der Membran bei einer bestimmten Druckdifferenz nach langer Betriebsdauer nicht mehr sichergestellt

Nach einer Vielzahl von Lastwechseln zeigt die Elastomermembran aufgrund von Temperatur-, Druck- und Medieneinflüssen ein Alterungsverhalten, welches eine ausreichend exakte Bestimmung eines Öffnungs- bzw. Schließdrucks nahezu nicht mehr zulässt. Die Folge hiervon ist eine erhöhte Materialbeanspruchung aller Bauteile, die einem unter Druck stehenden Fluidum ausgesetzt sind. Eine gezielte Druckentlastung und damit ein materialschonender Betrieb ist nur höchst unzuverlässig realisierbar.

Aus den US 5,167,419, DE 34 05 780 A1 und DE 33 33 229 A1 sind Radialwellendichtringe bekannt, bei denen unter Vorspannung stehende Mittel aus einem elastomeren Material gefertigt sind und entweder aus einer Dichtlippe herausgebildet oder als Dichtlippe ausgebildet sind.

+Dokument US 5,167,419 A zeigt einer Radialwellendichtring gemäß dem Oberbegriff von Anspruch 1.

### Darstellung der Erfindung

Der Erfindung liegt daher die Aufgabe zugrunde, einen Radialwellendichtring der eingangs genannten Art derart auszugestalten und weiterzubilden, dass eine zuverlässige und materialschonende Abdichtung auch nach sehr langer Betriebsdauer gewährleistet ist.

Die vorliegende Erfindung löst die zuvor genannte Aufgabe durch die Merkmale des Patentanspruchs 1. Danach ist ein Radialwellendichtring der eingangs genannten Art **dadurch gekennzeichnet, dass** die Mittel als bewegliche Platte ausgestaltet sind, welche in axialer Richtung als einzelnes Teil bewegbar ist.

Erfindungsgemäß ist zunächst erkannt worden, dass der Stand der Technik dichtende Mittel zeigt, welche einer starken Alterung unterworfen sind. In einem nächsten Schritt ist sodann erkannt worden, dass eine Vorspannung erlaubt, eine definierte Kraft zu bestimmen, bei deren Überschreiten eine Öffnung des Strömungskanals erfolgt. Durch geeignete Auswahl der Vorspannung ist es daher möglich, ganz in Abhängigkeit von den herrschenden Druckverhältnissen ein reproduzierbares Öffnungs- und Schließverhalten der Druckregulierungseinrichtung bzw. der Mittel zu realisieren. Insoweit ist durch den erfindungsgemäßen Radialwellendichtring sichergestellt, dass auch nach langer Betriebsdauer eine zuverlässige Abdichtung realisiert ist.

Die Mittel sind als bewegliche Platte ausgestaltet. Die Platte ist hierbei als separates isoliertes Teil ausgestaltet, welches in axialer Richtung parallel zur Wellenachse bewegbar ist. Durch diese konkrete Ausgestaltung kann der Strömungskanal problemlos freigegeben werden, ohne dass dieser noch teilweise durch die Mittel bzw. die Platte verschlossen ist. Durch die axiale Bewegung der Platte wird ein Strömungskanal über seine gesamte Querschnittsfläche hinweg frei gegeben. Insoweit kann eine Strömung des unter Druck stehenden Fluidums durch den Strömungskanal problemlos und ohne Verwirbelungen erfolgen. Folglich ist die eingangs genannte Aufgabe gelöst.

Vorteilhafterweise könnten die Mittel unter axialer Vorspannung stehen, wobei der Kraftvektor der Vorspannung parallel zur Achse einer Welle orientiert ist. Hierdurch können besonders günstige Strömungsverhältnisse erzeugt werden, da das Fluidum längs der Wellenachse strömen und eine laminare Strömung ausbilden kann.

Der Platte könnten Dichtlippen zur Anlage an eine Dichtfläche zugeordnet sein. Die Vorkehrung von Dichtlippen erlaubt eine zuverlässige Abdichtung des Strömungskanals, da die Dichtlippen zumindest geringfügig deformierbar sein können und sich folglich auch an unebenen Dichtflächen anlegen können. Vor diesem Hintergrund ist denkbar, dass die Platte als metallisches Teil ausgebildet ist, welches in ein Elastomer zumindest teilweise eingebettet ist

Die Verwendung eines Elastomers erlaubt eine problemlose Ausbildung von Dichtlippen an der beweglichen Platte.

Die Mittel bzw. die Platte könnten durch die Kraft eines Federelements unter Vorspannung stehen. Federelemente zeichnen sich durch eine klar bestimmte Federkonstante aus, welche erlaubt, den Anpressdruck bzw. die Vorspannung exakt einzustellen. Als Federelemente könnten elastomere Bauteile oder Tellerfedern Verwendung finden.

Vor diesem Hintergrund ist ganz konkret denkbar, dass das Federelement als Spiralfeder ausgestaltet ist. Spiralfedern zeichnen sich durch einen robusten mechanischen Aufbau aus und unterliegen nahezu keiner Alterung. Des Weiteren sind Spiralfedern über einen großen Auslenkungsbereich elastisch deformierbar und zeigen über einen großen Auslenkungsbereich eine gleich bleibende Federkonstante.

Die Druckregulierungseinrichtung könnte einen zweiten Stützkörper aufweisen, dem eine zweite Dichtlippe zugeordnet ist. Diese konkrete Ausgestaltung erlaubt das axiale Ineinanderschieben zweier vorgefertigter einzelner Radialwellendichtringe, welche jeweils einen Stützkörper und eine Dichtlippe aufweisen. Die beiden Radialwellendichtringe könnten derart komplementär zueinander ausgestaltet sein, dass sie in axialer Richtung ineinander pressbar oder steckbar sind. Die einzelnen Radialwellendichtringe, die Platte sowie das Federelement könnten rotationssymmetrisch ausgebildet sein. Dies erlaubt eine problemlose Montage der gesamten Einheit, nämlich des gesamten Radialwellendichtrings mit Druckregulierungseinrichtung allein durch Aufstecken bzw. Ineinanderstecken der einzelnen Teile.

Vor diesem Hintergrund ist denkbar, dass der zweite Stützkörper einen Durchgang aufweist, der als Strömungskanal fungiert. Der Durchgang könnte als Bohrung in einem metallischen Stützkörper, welcher als Stützring ausgebildet ist, vorgesehen sein. Eine Bohrung ist problemlos im Stützkörper vorsehbar.

Die erste und die zweite Dichtlippe könnten einen ersten Raum abdichten. In diesen könnte ein Fluidum von einem zweiten Raum durch den Durchgang einströmen und durch mindestens einen weiteren Strömungskanal abfließen. Diese konkrete Ausgestaltung erlaubt die Ausgestaltung eines ersten Raums, der als Überlauf fungiert. Dieser erste Raum, welcher als Überlauf fungiert, kann mit einer nachgeordneten Einrichtung wie einer Pumpe in Verbindung stehen, um stets eine konstante Druckdifferenz zwischen dem ersten Raum und dem zweiten Raum sicherzustellen.

Vor diesem Hintergrund ist denkbar, dass der weitere Strömungskanal, durch den ein Fluidum aus dem ersten Raum abfließen kann, entweder im ersten Stützkörper oder innerhalb der Welle angeordnet ist, an welcher der Radialwellendichtring anliegt. Durch diese konkrete Ausgestaltung kann eine Anordnung geschaffen werden, welche einen Radialwellendichtring und eine Welle umfasst, in welcher Strömungskanäle vorgesehen sind. Die Strömungskanäle können in radialer Richtung, in axialer Richtung oder zur Achse der Welle geneigt innerhalb der Welle vorgesehen sein. Denkbar ist auch, dass in der Welle Nuten vorgesehen sind, durch welche ein Fluidum aus dem Raum abfließen kann.

Dem ersten Stützkörper könnte mindestens eine Staublippe zugeordnet sein. Die Vorkehrung einer Staublippe verhindert das Eindringen von groben Verschmutzungen in einen Raum, der von der Staublippe und der ersten Dichtlippe gebildet wird. Dieser Raum ist üblicherweise mit einem Fett befüllt, welches zusätzlich das Eindringen von Verschmutzungen verhindert.

Die erste und die zweite Dichtlippe könnten durch Federn kraftbeaufschlagt sein. Vor diesem Hintergrund ist konkret denkbar, dass die Federn als Wurmfedem ausgestaltet sind. Hierdurch ist sichergestellt, dass die erste und die zweite Dichtlippe kraftbeaufschlagt an der Umfangsfläche der Welle anliegen.

Der hier beschriebene Radialwellendichtring könnte innerhalb eines Intervalls von plus/ minus 0,5 bar um einen vorgegebenen Druckwert ansprechen. Dieses exakte Ansprechverhalten ist von Vorteil, da der hier beschriebene Radialwellendichtring sehr teure Servotronic-Ventile oder Sensotronic-Ventile ersetzen kann. Hierdurch ist eine erhebliche Kosteneinsparung möglich.

Insbesondere bei einer Verwendung in Zahnstangenlenkungen, nämlich im Ventil einer hydraulischen Zahnstangenlenkung, ist dieses exakte Ansprechverhalten von Vorteil, da hier derzeit Servotronic-Ventite oder Sensotronic-Ventile verwendet werden.

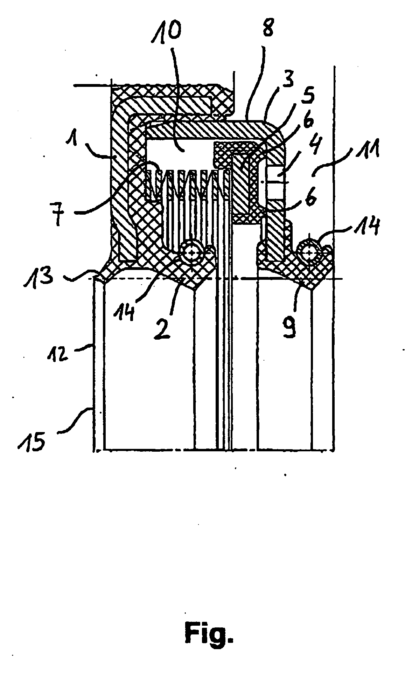

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels des erfindungsgemäßen Radialwellendichtrings anhand der Zeichnung zu verweisen.

In Verbindung mit der Erläuterung des bevorzugten Ausführungsbeispiels anhand der Zeichnung werden auch im Allgemeinen bevorzugte Ausgestaltungen und Weiterbildungen der Lehre erläutert.

### Kurzbeschreibung der Zeichnung

In der Zeichnung zeigt die einzige
- Fig.: in einer Schnittzeichnung einen Radialwellendichtring, welcher eine Druckregulierungseinrichtung mit unter Vorspannung stehenden Mitteln aufweist.

### Ausführung der Erfindung

Die einzige Fig. zeigt einen Radialwellendichtring, welcher einen ersten Stützkörper 1 umfasst. Der erste Stützkörper 1 ist als Stützring aus Metall ausgebildet. Dem Stützkörper 1 ist eine erste Dichtlippe 2 und eine Druckregulierungseinrichtung 3 zugeordnet. Der Druckregulierungseinrichtung 3 ist ein Strömungskanal 4 zugeordnet. Die Druckregulierungseinrichtung 3 weist unter Vorspannung stehende Mittel 5 auf, durch welche der Strömungskanal 4 verschließbar ist.

Die Mittel 5 sind als bewegliche Platte ausgestaltet, welche in axialer Richtung als einzelnes Teil bewegbar ist. Die Platte weist einen Kern aus Metall auf, der teilweise in ein Elastomer eingebettet ist. Die Platte 5 weist Dichtlippen 6 zur Anlage an eine Dichtfläche auf. Die Dichtlippen 6 sind aus dem Elastomer ausgebildet, welches den Kern umgibt. Die Dichtfläche ist im konkreten Ausführungsbeispiel die Innenfläche eines zweiten Stützkörpers 8.

Die Mittel bzw. die Platte 5 steht durch die Kraft eines Federelements 7 unter Vorspannung. Das Federelement 7 ist als Spiralfeder ausgestaltet. Die Spiralfeder 7 stützt sich einerseits mittelbar am ersten Stützkörper 1 und andererseits an der Platte 5 ab. Der Stützkörper 1 ist teilweise in ein Elastomer eingebettet, aus welchem die erste Dichtlippe 2 geformt ist Die erste Dichtlippe 2 liegt am Außenumfang einer Welle 15 an.

Die Druckregulierungseinrichtung 3 weist einen zweiten Stützkörper 8 auf, dem eine zweite Dichtlippe 9 zugeordnet ist, welche ebenfalls am Außenumfang der Welle 15 anliegt. Der zweite Stützkörper 8 weist einen Durchgang auf, der als Strömungskanal 4 fungiert. Der zweite Stützkörper 8 ist aus Metall ausgebildet und der Durchgang als runde Bohrung.

Die erste 2 und die zweite Dichtlippe 9 dichten einen Raum 10 ab, in welchen ein Fluidum von einem zweiten Raum 11 durch den Strömungskanal 4 einströmen und durch mindestens einen weiteren Strömungskanal 12 abfließen kann. Der weitere Strömungskanal 12 verläuft innerhalb der Welle 15 und steht in Strömungsverbindung mit dem ersten Raum 10.

Dem ersten Stützkörper 1 ist mindestens eine Staublippe 13 zugeordnet, welche aus dem Elastomer ausgeformt ist, in welches der erste Stützkörper 1 zumindest teilweise eingebettet ist.

Die erste 2 und die zweite Dichtlippe 9 sind durch Federn 14 kraftbeaufschlagt Die Federn 14 sind als Wurmfedem ausgestaltet und drücken die erste 2 und die zweite Dichtlippe 9 gegen den Außenumfang der Welle 15.

Im Raum 11 herrscht üblicherweise ein Druck von 8 bar, im Raum 10 ein Druck von 3 bar. Insoweit besteht im Betrieb zwischen dem Raum 10 und dem Raum 11 eine Druckdifferenz von 5 bar. Bei Überschreiten der Druckdifferenz, wenn nämlich im Raum 11 der Druck über 8 bar ansteigt, wird die Platte 5 gegen die Vorspannung der Spiralfeder 7 axial derart bewegt, dass der Strömungskanal 4 freigegeben wird. Das Fluidum, nämlich ein Öl, kann aus dem Raum 11 sodann in den Raum 10 einströmen und vom Raum 10 über einen Strömungskanal 12 in eine nachgelagerte Einrichtung wie eine Pumpe abgeführt werden.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass das zuvor rein willkürlich gewählte Ausführungsbeispiel lediglich zur Erörterung der erfindungsgemäßen Lehre dient, diese jedoch nicht auf dieses Ausführungsbeispiel einschränkt.

## Patentansprüche

1. Radialwellendichtring, umfassend einen Stützkörper (1), wobei dem Stützkörper (1) mindestens eine erste Dichtlippe (2) und eine Druckregulierungseinrichtung (3) zugeordnet sind, welcher mindestens ein Strömungskanal (4) zugeordnet ist, wobei die Druckregullerungseinrichtung (3) unter Vorspannung stehende Mittel (5) aufweist, durch die der Strömungskanal (4) verschließbar ist, **dadurch gekennzeichnet, dass** die Mittel (5) als bewegliche Platte ausgestaltet sind, welche in axialer Richtung als einzelnes Teil bewegbar ist

2. Radialwellendichtring nach Anspruch 1, **dadurch gekennzeichnet, dass** der Platte Dichtlippen (6) zur Anlage an eine Dichtfläche zugeordnet sind.

3. Radialwellendichtring nach einem der Ansprüche 1 oder 2, **dadurch gekennzeichnet, dass** die Mittel (5) durch die Kraft eines Federelements (7) unter Vorspannung stehen.

4. Radialwellendichtring nach Anspruch 3, **dadurch gekennzeichnet, dass** das Federelement (7) als Spiralfeder ausgestaltet ist.

5. Radialwellendichtring nach einem der Ansprüche 1 bis 4, **dadurch gekenntzeichnet, dass** die Druckregulierungseinrichtung (3) einen zweiten Stützkörper (8) aufweist, dem eine zweite Dichtlippe (9) zugeordnet ist.

6. Radialwellendichtring nach Anspruch 5, **dadurch gekennzeichnet, dass** der zweite Stützkörper (8) einen Durchgang aufweist, der als Strömungskanal (4) fungiert.

7. Radialwellendichtring nach Anspruch 5 oder 6, **dadurch gekennzeichnet, dass** die erste (2) und die zweite Dichtlippe (9) einen ersten Raum (10) abdichten, in welchen ein Fluidum von einem zweiten Raum (11) durch den Strömungskanal (4) einströmen und durch mindestens einen weiteren Strömungskanal (12) abfließen kann.

8. Radialwellendichtring nach einem der Ansprüche 1 bis 7, **dadurch gekennzeichnet, dass** dem ersten Stützkörper (1) mindestens eine Staublippe (13) zugeordnet ist.

9. Radialwellendichtring nach einem der Ansprüche 5 bis 7 und 8, sofern Patentanspruch 8 auf einen der Ansprüche 5 bis 7 rückbezogen ist, **dadurch gekennzeichnet, dass** die erste (2) und die zweite Dichtlippe (9) durch Federn (14) kraftbeaufschlagt sind.

## Claims

1. Radial shaft sealing ring, comprising a supporting body (1), the supporting body (1) being assigned at least one first sealing lip (2) and a pressure regulating mechanism (3), which is assigned at least one flow channel (4), the pressure regulating mechanism (3) heaving means (5) which are biased and by which the flow channel (4) can be closed, **characterized in that** the means (5) are formed as a movable plate which is movable as a single part in the axial direction.

2. Radial shaft sealing ring according to Claim 1, **characterized in that** the plate is assigned sealing lips (6) for bearing against a sealing face.

3. Radial shaft sealing ring according to either of Claims 1 and 2, **characterized in that** the means (5) are biased by the force of a spring element (7).

4. Radial shaft sealing ring according to Claim 3, **characterized in that** the spring element (7) is formed as a spiral spring.

5. Radial shaft sealing ring according to one of Claims 1 to 4, **characterized in that** the pressure regulating mechanism (3) has second supporting body (8), which is assigned a second sealing lip (9).

6. Radial shaft sealing ring according to Claim 5, **characterized in that** the second supporting body (8) has a passage which acts as flow channel (4).

7. Radial shaft sealing ring according to Claim 5 or 6, **characterized in that** the first sealing lip (2) and the second sealing lip (9) seal off a first space (10), into which a fluid can flow from a second space (11) through the flow channel (4) and can flow away through at least one further flow channel (12).

8. Radial shaft sealing ring according to one of Claims 1 to 7, **characterized in that** the first supporting body (1) is assigned at least one dust lip (13).

9. Radial shaft sealing ring according to one of Claims 5 to 7 and 8, in so far as Patent Claim 8 refers to Claims 5 to 7, **characterized in that** the first sealing lip (2) and the second sealing lip (9) are subjected to force by springs (14).

## Revendications

1. Joint à lèvre radial, comprenant un corps de support (1), au moins une première lèvre d'étanchéité (2) et un dispositif de régulation de pression (3) étant associés au corps de support (1), au moins un canal d'écoulement (4) étant associé au dispositif de régulation de pression (3), le dispositif de régulation de pression (3) présentant des moyens (5) soumis à une précontrainte, qui permettent de fermer le canal d'écoulement (4), **caractérisé en ce que** les moyens (5) sont configurés sous forme de plaque mobile, qui peut être déplacée sous forme de pièce séparée dans la direction axiale.

2. Joint à lèvre radial selon la revendication 1, **caractérisé en ce que** la plaque est associée à des lèvres d'étanchéité (6) devant s'appliquer contre une surface d'étanchéité.

3. Joint à lèvre radial selon l'une quelconque des revendications 1 ou 2, **caractérisé en ce que** les moyens (5) sont soumis à une précontrainte par la force d'un élément de ressort (7).

4. Joint à lèvre radial selon la revendication 3, **caractérisé en ce que** l'élément de ressort (7) est configuré en tant que ressort spiral.

5. Joint à lèvre radial selon l'une quelconque des revendications 1 à 4, **caractérisé en ce que** le dispositif de régulation de pression (3) présente un deuxième corps de support (8) auquel est associée une deuxième lèvre d'étanchéité (9).

6. Joint à lèvre radial selon la revendication 5, **caractérisé en ce que** le deuxième corps de support (8) présente un passage qui sert de canal d'écoulement (4).

7. Joint à lèvre radial selon la revendication 5 ou 6, **caractérisé en ce que** la première (2) et la deuxième (9) lèvre d'étanchéité scellent une première chambre (10) dans laquelle un fluide peut s'écouler depuis une deuxième chambre (11) à travers le canal d'écoulement (4) et s'échapper à travers au moins un autre canal d'écoulement (12).

8. Joint à lèvre radial selon l'une quelconque des revendications 1 à 7, **caractérisé en ce que** l'on associe au premier corps de support (1) au moins une lèvre anti-poussière (13).

9. Joint à lèvre radial selon l'une quelconque des revendications 5 à 7 et 8, dans la mesure où la revendication 8 dépend de l'une des revendications 5 à 7, **caractérisé en ce que** la première (2) et la deuxième (9) lèvre d'étanchéité sont sollicitées par force par des ressorts (14).
